(19) **Europäisches Patentamt European Patent Office Office européen des brevets**

(11) **EP 4 602 923 A1**

(12) **EUROPEAN PATENT APPLICATION**
published in accordance with Art. 153(4) EPC

(43) Date of publication:
20.08.2025 Bulletin 2025/34

(21) Application number: 23882986.5

(22) Date of filing: 18.10.2023

(51) International Patent Classification (IPC):
*A23J 3/20* (2006.01)        *A23J 3/16* (2006.01)
*A23J 3/22* (2006.01)        *A23P 30/20* (2016.01)

(52) Cooperative Patent Classification (CPC):
A23J 3/16; A23J 3/20; A23J 3/22; A23P 30/20

(86) International application number:
PCT/KR2023/016090

(87) International publication number:
WO 2024/090879 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.10.2022  KR 20220138396

(71) Applicant: Daesang Corporation
Seoul 03130 (KR)

(72) Inventors:
• KIM, Bo-Ra
  Goyang-si Gyeonggi-do 10415 (KR)
• HWANG, Ji-Eun
  Seoul 03677 (KR)
• JEON, Jin-Young
  Seongnam-si Gyeonggi-do 13589 (KR)

(74) Representative: Turner, Craig Robert
Venner Shipley LLP
200 Aldersgate
London EC1A 4HD (GB)

(54) **METHOD FOR REDUCING BEANY FLAVOR OF TEXTURED VEGETABLE PROTEIN CONTAINING SOY PROTEIN**

(57)    The present invention provides a method for reducing the beany flavor of a textured vegetable protein containing soy protein, the method of which comprises using chlorella. In addition, the present invention provides a method for preparing a textured vegetable protein with reduced beany flavor, the method of which comprises using chlorella.

**FIG. 2**

EP 4 602 923 A1

**Description**

**TECHNICAL FIELD**

The present invention relates to a method for reducing the beany flavor of a textured vegetable protein containing soy protein. And, the present invention relates to a method for preparing a textured vegetable protein with reduced beany flavor.

**BACKGROUND ART**

A textured vegetable protein (TVP) is being used as a material for producing a meat substitute. The textured vegetable protein is a vegetable soy protein having texture similar to the texture of meat by inducing physical changes thereof and is referred to as 'textured soy protein', 'artificial meat', and the like. Recently, it has taste and texture almost similar to exiting meat and thus is also referred to as 'plant protein-based meat analog'. In addition, it is also referred to as various names such as 'plant-based meat', 'meat substitute or meat alternative', 'meat analogue', and 'vegetarian meat'.
A textured vegetable protein is prepared by extrusion-forming soy proteins such as concentrated soy protein (CSP) and isolated soy protein (ISP) as main materials, along with additives such as salt and gluten. The 'extrusion-forming' is a high-temperature, short-term process technology that can extrude vegetable protein into a fibrous tissue with a meat-like texture in a short period of time by applying heat, pressure, and shear force to the inside of an extruder barrel. Depending on the structure of the extrusion port and the moisture content of the product, textured vegetable proteins may be classified into a high moisture extrusion (HME) textured vegetable protein and a low moisture extrusion (LME) textured vegetable protein.
However, textured vegetable proteins containing soy protein, such as concentrated soy protein or isolated soy protein, have the problem of lowering consumer preference due to characteristic off-flavors of soybeans, such as green smell or beany flavor.

**DISCLOSURE**

**Technical Problem**

The present inventors have carried out various studies to develop a method capable of reducing the beany flavor of a textured vegetable protein containing soy protein. As a result, the present inventors have found that, when chlorella is mixed with soy protein and then an extrusion process was performed, a textured vegetable protein with significantly reduced beany flavor is obtained. That is, the present inventors have found that chlorella acts as a beany flavor-reducing agent capable of reducing the beany flavor of textured vegetable proteins containing soy protein.
Therefore, it is an object of the present invention to provide a method for reducing the beany flavor of a textured vegetable protein containing soy protein, comprising using chlorella.
It is another object of the present invention to provide a method for preparing a textured vegetable protein with reduced beany flavor, comprising using chlorella.

**Technical Solution**

In accordance with an aspect of the present invention, there is provided a method for reducing the beany flavor of a textured vegetable protein containing soy protein, the method of which comprises extruding a mixture comprising chlorella and soy protein to form a textured vegetable protein.
In accordance with another aspect of the present invention, there is provided a method for preparing a textured vegetable protein with reduced beany flavor, the method of which comprises extruding a mixture comprising chlorella and soy protein to form a textured vegetable protein.

**ADVANTAGEOUS EFFECTS**

It is found by the present invention that, when chlorella is mixed with soy protein and then an extrusion process was performed, a textured vegetable protein with significantly reduced beany flavor is obtained. That is, it is found by the present invention that chlorella acts as a beany flavor-reducing agent capable of reducing the beany flavor of textured vegetable proteins containing soy protein. Therefore, the method according to the present invention can be usefully used to reduce the beany flavor of textured vegetable proteins containing soy protein and can also be usefully used to prepare textured vegetable proteins with reduced beany flavor.

## DESCRIPTION OF DRAWINGS

FIG. 1 shows the appearance of the high moisture extrusion (HME) textured vegetable protein prepared according to Comparative Example 1.

FIG. 2 shows the appearance of the high moisture extrusion (HME) textured vegetable protein prepared according to Example 1-1.

FIG. 3 shows the appearance of the high moisture extrusion (HME) textured vegetable protein prepared according to Example 1-2.

FIG. 4 shows the appearance of the high moisture extrusion (HME) textured vegetable protein prepared according to Example 1-3.

FIG. 5 shows the appearance of the high moisture extrusion (HME) textured vegetable protein prepared according to Example 1-4.

FIG. 6 shows the appearance of the high moisture extrusion (HME) textured vegetable protein prepared according to Example 1-5.

FIG. 7 shows the appearance of the high moisture extrusion (HME) textured vegetable protein prepared according to Comparative Example 2.

FIG. 8 shows the appearance of the high moisture extrusion (HME) textured vegetable protein prepared according to Example 2-1.

FIG. 9 shows the appearance of the high moisture extrusion (HME) textured vegetable protein prepared according to Example 2-2.

FIG. 10 shows the appearance of the high moisture extrusion (HME) textured vegetable protein prepared according to Example 2-3.

## BEST MODE

The present invention provides a method for reducing the beany flavor of a textured vegetable protein containing soy protein, the method of which comprises extruding a mixture comprising chlorella and soy protein to form a textured vegetable protein.

And, the present invention provides a method for preparing a textured vegetable protein with reduced beany flavor, the method of which comprises extruding a mixture comprising chlorella and soy protein to form a textured vegetable protein.

The chlorella may be a powder obtained by drying a biomass obtained through culturing a chlorella strain. The chlorella strain includes, without limitation, a known genus *Chlorella* strain, for example, *Chlorella protothecoides, Chlorella vulgaris, Chlorella sorokiniana,* or *Chlorella pyrenoidosa.*

For example, the chlorella strain may be *Chlorella vulgaris* DSV77 (KCTC 11383BP) disclosed in Korean Patent No. 10-1106198, and the like.

For example, the chlorella strain may be a chlorophyll-deficient chlorella strain. That is, the chlorella may be a powder obtained by drying a biomass obtained through culturing a chlorophyll-deficient chlorella strain. The chlorophyll-deficient chlorella strain may be a known genus *Chlorella* strain, for example, a *Chlorella protothecoides* species, which is cultured in a yellow colony form. Preferably, the chlorophyll-deficient chlorella strain may be a *Chlorella protothecoides* species obtained through heterotrophic culture, with a sugar, in the absence of light. In an embodiment, the chlorophyll-deficient chlorella strain may be a strain obtained through heterotrophic culture of *Chlorella protothecoides* DS-NCRC7 (KCTC 18633P) (Korean Patent No. 10-2026681) having high crude-protein productivity which was developed by the present inventors, with a sugar, in the absence of light. The culture may be carried out according to conventional culture methods of a *Chlorella* strain, e.g., the culture methods disclosed in Korean Patent No. 10-2026681. For example, the culture may be carried out in a medium containing glucose as a sugar source, phosphates ($KH_2PO_4$, $K_2HPO_4$, etc.), metal salts ($MgSO_4$, $ZnSO_4$, $CuSO_4$, $FeSO_4$, $NaMoO_4$, $MnCl_2$, etc.), boric acid, etc., in water (e.g., purified water, etc.). And, if necessary, the medium may further include an antifoaming agent or the like. The culture in the medium described above may be carried out according to conventional culture methods, for example, according to aseptic and heterotrophic fed-batch culture (e.g., using glucose as a sugar source) in a sterile tank, under 0.3-1.0 vvm of air, 200-500 rpm of agitation, and pH 6.5-7.5.

For example, the chlorella strain may be a white *Chlorella protothecoides* strain. Preferably, the chlorella strain may be a white *Chlorella protothecoides* strain having a high crude protein content developed by the present inventors (Korean Patent Application No. 10-2023-0022628, filed on February 21, 2023). The Korean Patent Application No. 10-2023-0022628 is incorporated herein by reference in its entirety. In one embodiment, the chlorella may be a powder obtained by drying a biomass obtained through culturing a *Chlorella protothecoides* strain, having a whiteness index (WI) of 70 or more as calculated from the following formula and a crude protein content of 55 wt% or more in the biomass.

$$\text{WI} = 100 - \sqrt{(100 - L)^2 + a^2 + b^2}$$

wherein, L, a, and b are Hunter L, a, and b values.

A crude protein content in the biomass may be 55 to 80 wt%, and the chlorophyll content in the biomass may be 3.0 or less mg/g dry cell wight (DCW), for example, 0.1 to 3.0 mg/g dry cell wight. In an embodiment, the strain may be *Chlorella protothecoides* DS-NCRC7W) (KCTC 15163BP). The culture may be carried out according to conventional culture methods of a *Chlorella* strain, e.g., the culture methods disclosed in Korean Patent No. 10-2026681. For example, the culture may be carried out in a medium containing glucose as a sugar source, phosphates ($KH_2PO_4$, $K_2HPO_4$, etc.), ammonium salts (($NH_4$)$_2SO_4$, etc.), calcium salts ($CaCl_2$, etc.), metal salts ($MgSO_4$, $ZnSO_4$, $CuSO_4$, $FeSO_4$, etc.), etc., in water (e.g., purified water, etc.). In an embodiment, the culture may be carried out in an aqueous medium having a pH of 6.5 to 7.5, containing 2-15 g/L of $MgSO_4$, 0.5-5 g/L of $KH_2PO_4$, 0.0001-0.1 g/L of $ZnSO_4$, 0.0001-0.01 g/L of $CuSO_4$, 0.001-0.1 g/L of $CaCl_2$, and 0.001-0.1 g/L of $FeSO_4$. And, if necessary, the medium may further include an antifoaming agent or the like. The culture in the medium described above may be carried out according to conventional culture methods, for example, according to fed-batch culture in a sterile tank, under 0.3-1.0 vvm of air and 200-500 rpm of agitation.

The powder obtained by drying the biomass obtained by culturing the above chlorella strain (also referred to herein as 'chlorella raw material' or 'chlorella powder') can be obtained, for example, by culturing a chlorella strain, recovering a biomass according to a conventional method, and then performing a drying process such as spray drying. For example, it may be prepared by recovering a biomass, e.g., through centrifuging a culture solution of a chlorella strain and then drying with a conventional method such as spray drying, if necessary. The chlorella may comprise a microalgae protein of 45 wt% or more based on dry weight. And, the chlorella may have a lipid content of preferably 30 wt% or less, more preferably 20 wt% or less, still more preferably 5 to 15 wt%, and particularly preferably 6 to 10 wt%, based on dry weight.

In the method of the present invention, the amount of the chlorella may be 0.1 to 31 wt%, preferably 3 to 16 wt%, based on the total weight of the mixture.

In the method of the present invention, the soy protein may be used in an amount sufficient to obtain a desired textured vegetable protein. For example, the amount of the soy protein may be 10 to 36 wt%, preferably 11 to 34 wt%, based on the total weight of the mixture.

In the method of the present invention, the mixture may further comprise 35 to 65 wt%, preferably 45 to 60 wt%, of water. In an embodiment, the mixture may comprise 10 to 36 wt% of soy protein, 0.1 to 31 wt% of chlorella, and 35 to 65 wt% of water.

In the method of the present invention, the mixture may also further comprise gluten, oil, or a mixture thereof. In an embodiment, the mixture may further comprise 0 to 10 wt% of gluten and 1 to 1.5 wt% of oil. In another embodiment, the mixture may comprise 10 to 36 wt% of soy protein, 0.1 to 31 wt% of chlorella, 0 to 10 wt% of gluten, 1 to 1.5 wt% of oil, and 35 to 65 wt% of water.

In the method of the present invention, the extruding may be performed by a method conventionally used for forming textured vegetable proteins. For example, extruding is carried out at an ejection temperature of 80 to 170 °C and a cooling temperature (e.g., the temperature of a cooling die) of 68 to 75 °C, in a twin-screw extruder. However, those skilled in the art will appreciate that a variety of extrusion conditions may be employed.

The present invention will be described in further detail with reference to the following examples. These examples are for illustrative purposes only and are not intended to limit the scope of the present invention.

Example 1: Preparation and evaluation of textured vegetable proteins containing chlorella

(1) Chlorella powder

According to the method disclosed in Korean Patent No. 10-2026681, *Chlorella protothecoides* DS-NCRC7 (KCTC 18633P) was mass-cultured in a 240Kℓ Jar fermenter, followed by centrifuging to recover the biomass, which was then spray-dried to obtain a powder. The resulting powder was used as a 'chlorella powder' in Example 1 below. As a result of analysis of the 'chlorella powder', it contained about 7 wt% of lipid and about 60 wt% microalgae protein, based on dry weight.

(2) Preparation of textured vegetable proteins

Textured vegetable proteins were prepared according to the components and amounts of the following Table 1.

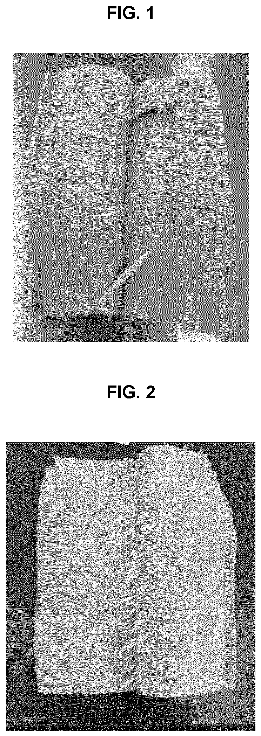

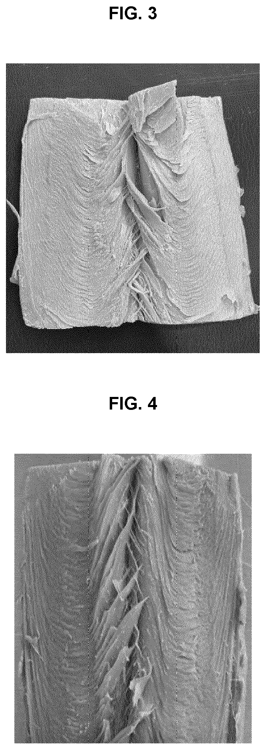

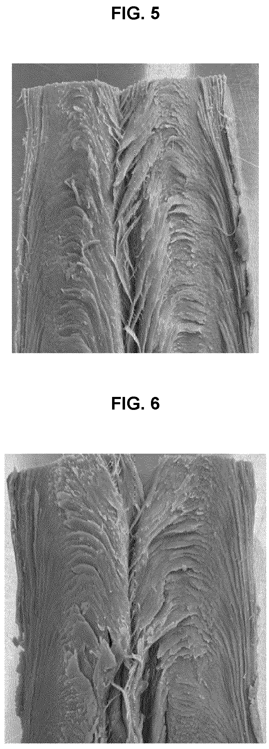

The content of each component in Table 1 means % by weight. Specifically, soy protein concentrate (Arcon™ SM, ADM (Archer Daniels Midland), protein content of 75%), the chlorella powder, salt, gluten (Examples 1-3 to 1-5), oil, and purified water were mixed. Each resulting mixture was extruded using a twin-screw extruder (Twin-Screw PiloTwin™, Buhler) with five barrels set to different ejection temperatures of about 90 to 168 °C and a cooling die temperature of about 70°C to produce high moisture (HME) textured vegetable proteins. FIGs. 1 to 6 show the appearances of the high moisture (HME) textured vegetable proteins prepared according to Comparative Example 1 and Examples 1-1 to 1-5, respectively.

Table 1

| | Comparative Example 1 | Example | | | | |
|---|---|---|---|---|---|---|
| | | Example 1-1 | Example 1-2 | Example 1-3 | Example 1-4 | Example 1-5 |
| Soy protein concentrate | 37 | 33 | 29.3 | 18.9 | 15.4 | 11.4 |
| Chlorella powder | - | 10 | 15.7 | 20.0 | 25.0 | 31.2 |
| Salt | 1.0 | 1.0 | 1.0 | 1.0 | 1.0 | 1.0 |
| Gluten | - | - | - | 7.1 | 7.6 | 9.4 |
| Oil | 1.5 | 1.5 | 1.5 | 1.5 | 1.5 | 1.5 |
| Purified water | 60.5 | 54.5 | 52.5 | 51.5 | 49.5 | 45.5 |

(3) Solid Phase Micro Extraction (SPME) analysis (1)

The textured vegetable proteins prepared in Comparative Example 1 and Examples 1-1 and 1-2 were pulverized at an ultra-low temperature using a freeze grinder. After 2 g of the freeze-pulverized sample and 4 μL of 1,2,3-trichloropropane (500 ppm, internal standard) were mixed in an SPME amber vial, an SPME fiber (65 μm PDMS/DVB, Supelco) was inserted into the top of the vial for 40 minutes to allow volatile substances to be adsorbed.

The amounts of 2-heptanone and 2-pentylfuran were analyzed as beany flavor indicators. For the analysis of said compounds, a GC-MS/MS system from Thermo Scientific and a DB-Wax (60 m x 0.25 mm, 0.50 micron) column were used. The analysis was performed in Split mode by inserting the SPME inlet liner (4 mm i.d., Agilent) into the GC injector. The temperature of the GC oven was maintained at 40 °C for 5 minutes, then increased at 4 °C/min to 200°C, and maintained at 200 °C for 10 minutes. The temperatures of the injector and the detector were set to 230 °C and 250 °C, respectively. Each compound was identified with the NIST Mass Spectral Search Program. The results are shown in the following Table 2.

Table 2

| | 2-Heptanone | | 2-Pentylfuran | |
|---|---|---|---|---|
| | Relative peak ratio | Relative percentage | Relative peak ratio | Relative percentage |
| Comparative Example 1 | 0.54±0.03 | 100 | 2.85±0.14 | 100 |
| Example 1-1 | 0.45±0.02 | 82 | 2.69±0.08 | 94 |
| Example 1-2 | 0.40±0.01 | 73 | 2.51±0.01 | 88 |

From the results in Table 2 above, it can be confirmed that the relative values of 2-heptanone and 2-pentylfuran, which are representative beany flavor indicators, are reduced when chlorella was mixed in.

(4) Solid Phase Micro Extraction (SPME) analysis (2)

According to the components and amounts of the following Table 3, soy protein concentrate (Arcon™ SM, ADM (Archer Daniels Midland), protein content of 75%) and the chlorella powder were mixed to prepare a dispersion containing soy protein concentrate at a concentration of 5% (w/w). The content of each component in Table 3 means % by weight. After the resulting dispersions were heated at 90 °C for 15 minutes, the amounts of 2-heptanone and 2-pentylfuran, which are beany flavor indicators, were analyzed via GC-MS/MS according to the same methods as in (3) above. The results are shown in Table 4.

Table 3

|  | Dispersion 1-1 | Dispersion 1-2 | Dispersion 1-3 | Dispersion 1-4 |
|---|---|---|---|---|
| Soy protein concentrate | 5.0 | 5.0 | 5.0 | 5.0 |
| Chlorella powder | - | 1.25 | 2.5 | 5.0 |
| Purified water | 95.0 | 93.75 | 92.5 | 90.0 |

Table 4

|  | 2-Heptanone | | 2-Pentylfuran | |
|---|---|---|---|---|
|  | Relative peak ratio | Relative percentage | Relative peak ratio | Relative percentage |
| Dispersion 1-1 | 0.038±0.003 | 100 | 0.139±0.008 | 100 |
| Dispersion 1-2 | 0.029±0.002 | 77 | 0.051±0.001 | 37 |
| Dispersion 1-3 | 0.027±0.002 | 69 | 0.039±0.002 | 28 |
| Dispersion 1-4 | 0.031±0.003 | 81 | 0.020±0.000 | 15 |

From the results in Table 4 above, it can be confirmed that the relative values of 2-heptanone and 2-pentylfuran, which are representative beany flavor indicators, are reduced when chlorella is mixed in. Especially, it can be confirmed that the content of 2-pentylfuran can be reduced by more than half.

Example 2: Preparation and evaluation of textured vegetable proteins containing chlorella

(1) Chlorella powder

According to the method disclosed in Korean Patent Application No. 10-2023-0022628 filed on February 21, 2023, *Chlorella protothecoides* DS-NCRC7W) (KCTC 15163BP) was mass-cultured in a 240Kℓ Jar fermenter, followed by centrifuging to recover the biomass, which was then spray-dried to obtain a powder. The resulting powder was used as a 'chlorella powder' in Example 2 below. As a result of analysis of the 'chlorella powder', it contained about 11 wt% of lipid and about 60 wt% of microalgae protein, based on dry weight.

(2) Preparation of textured vegetable proteins

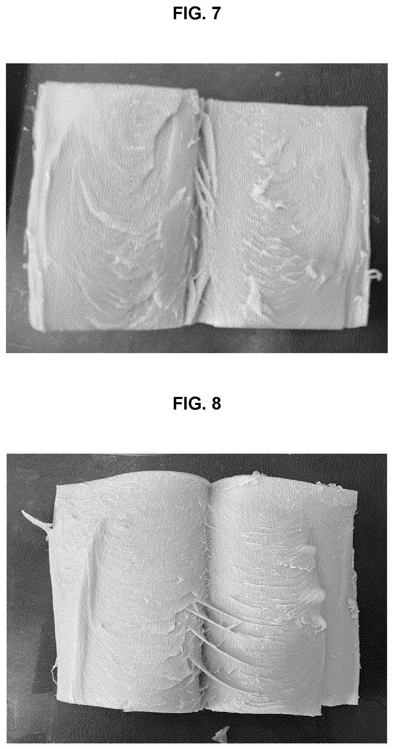

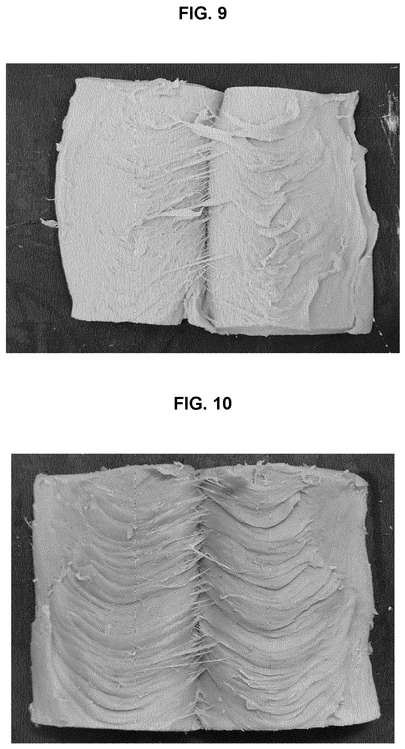

Textured vegetable proteins were prepared according to the components and amounts of the following Table 5. The content of each component in Table 5 means % by weight. Specifically, soy protein concentrate (Arcon™ SM, ADM (Archer Daniels Midland), protein content of 75%), the chlorella powder, gluten (Example 2-3), oil, and purified water were mixed. Each resulting mixture was extruded using a twin-screw extruder (Twin-Screw PiloTwin™, Buhler) with five barrels set to different ejection temperatures of about 90 to 168 °C and a cooling die temperature of about 70°C to produce high moisture (HME) textured vegetable proteins. FIGs. 7 to 10 show the appearances of the high moisture (HME) textured vegetable proteins prepared according to Comparative Example 2 and Examples 2-1 to 2-3, respectively.

Table 5

|  | Comparative Example 2 | Example | | |
|---|---|---|---|---|
|  |  | Example 2-1 | Example 2-2 | Example 2-3 |
| Soy protein concentrate | 37 | 32 | 31 | 25 |
| Chlorella powder | - | 5 | 10 | 15 |
| Gluten | - | - | - | 5 |
| Oil | 1.5 | 1.5 | 1.5 | 1.5 |
| Purified water | 61.5 | 61.5 | 57.5 | 53.5 |

(3) Solid Phase Micro Extraction (SPME) analysis (1)

For the textured vegetable proteins prepared in Comparative Example 2 and Examples 2-1 to 2-3, the amounts of 2-heptanone, 2-pentylfuran, and 1-octen-3-ol, which are beany flavor indicators, were analyzed using the same method as in (3) of Example 1. The results are shown in Table 6 below.

Table 6

| | 2-Heptanone | | 2-Pentylfuran | | 1-Octen-3-ol | |
|---|---|---|---|---|---|---|
| | Relative peak ratio | Relative percentage | Relative peak ratio | Relative percentage | Relative peak ratio | Relative percentage |
| Comparative Example 2 | 0.568±0.007 | 100 | 4.630±0.173 | 100 | 0.717±0.004 | 100 |
| Example 2-1 | 0.518±0.023 | 91 | 4.164±0.175 | 90 | 0.714±0.047 | 100 |
| Example 2-2 | 0.485±0.007 | 85 | 4.239±0.131 | 92 | 0.650±0.013 | 91 |
| Example 2-3 | 0.444±0.021 | 78 | 3.669±0.262 | 79 | 0.569±0.023 | 79 |

From the results in Table 6 above, it can be confirmed that the relative values of 2-heptanone, 2-pentylfuran, and 1-octen-3-ol, which are representative beany flavor indicators, are reduced when chlorella was mixed in.

(4) Solid Phase Micro Extraction (SPME) analysis (2)

According to the components and amounts of the following Table 7, soy protein concentrate (Arcon™ SM, ADM (Archer Daniels Midland), protein content of 75%) and the chlorella powder were mixed to prepare a dispersion containing soy protein concentrate at a concentration of 5% (w/w). The content of each component in Table 7 means % by weight. After the resulting dispersions were heated at 90 °C for 15 minutes, the amounts of 2-heptanone, 2-pentylfuran, and 3,5-(E,E)-octadien-2-one, which are beany flavor indicators, were analyzed via GC-MS/MS according to the same methods as in (3) of Example 1. The results are shown in Table 8.

Table 7

| | Dispersion 2-1 | Dispersion 2-2 | Dispersion 2-3 | Dispersion 2-4 |
|---|---|---|---|---|
| Soy protein concentrate | 5.0 | 5.0 | 5.0 | 5.0 |
| Chlorella powder | - | 1.25 | 2.5 | 5.0 |
| Purified water | 95.0 | 93.75 | 92.5 | 90.0 |

Table 8

| | 2-Heptanone | | 2-Pentylfuran | | 3,5-(E,E)-Octadien-2-one | |
|---|---|---|---|---|---|---|
| | Relative peak ratio | Relative percentage | Relative peak ratio | Relative percentage | Relative peak ratio | Relative percentage |
| Dispersion 2-1 | 0.088±0.001 | 100 | 0.152±0.006 | 100 | 0.160±0.004 | 100 |
| Dispersion 2-2 | 0.055±0.001 | 62 | 0.074±0.008 | 49 | 0.051±0.000 | 32 |
| Dispersion 2-3 | 0.044±0.000 | 49 | 0.055±0.004 | 36 | 0.027±0.000 | 17 |
| Dispersion 2-4 | 0.036±0.002 | 41 | 0.048±0.001 | 32 | 0.022±0.000 | 14 |

From the results in Table 8 above, it can be confirmed that the relative values of 2-heptanone, 2-pentylfuran, and 3,5-(E,E)-octadien-2-one, which are representative beany flavor indicators, are significantly reduced when chlorella is mixed in.

Example 3: Preparation and evaluation of soy protein concentrate-containing dispersions

The culture solution of *Chlorella vulgaris* DSV77 (KCTC 11383BP, Korean Patent No. 10-1106198) was centrifuged to recover the biomass, which was then spray-dried to obtain a 'Chlorella powder CV'. According to the components and amounts of the following Table 9, soy protein concentrate (Arcon™ SM, ADM (Archer Daniels Midland), protein content of 75%) and the chlorella powder CV were mixed to prepare a dispersion containing soy protein concentrate at a concentration of 5% (w/w). The content of each component in Table 9 means % by weight. After the resulting dispersions were heated at 90 °C for 15 minutes, the amounts of 1-octen-3-ol and 2-pentylfuran, which are beany flavor indicators, were analyzed via GC-MS/MS according to the same methods as in (3) of Example 1. The results are shown in Table 10.

Table 9

|  | Dispersion 3-1 | Dispersion 3-2 | Dispersion 3-3 | Dispersion 3-4 |
|---|---|---|---|---|
| Soy protein concentrate | 5.0 | 5.0 | 5.0 | 5.0 |
| Chlorella powder CV | - | 1.25 | 2.5 | 5.0 |
| Purified water | 95.0 | 93.75 | 92.5 | 90.0 |

Table 10

|  | 1-Octen-3-ol | | 2-Pentylfuran | |
|---|---|---|---|---|
|  | Relative peak ratio | Relative percentage | Relative peak ratio | Relative percentage |
| Dispersion 3-1 | 0.138±0.000 | 100 | 0.152±0.006 | 100 |
| Dispersion 3-2 | 0.059±0.003 | 43 | 0.018±0.002 | 12 |
| Dispersion 3-3 | 0.047±0.001 | 34 | 0.016±0.000 | 11 |
| Dispersion 3-4 | 0.038±0.001 | 28 | 0.015±0.000 | 10 |

From the results in Table 10 above, it can be confirmed that the relative values of 1-octen-3-ol and 2-pentylfuran, which are representative beany flavor indicators, are significantly reduced when chlorella is mixed in.

Example 4: Preparation and evaluation of soy protein concentrate-containing dispersions

The culture solution of *Chlorella sorokiniana* (UTEX1230) was centrifuged to recover the biomass, which was then spray-dried to obtain a 'Chlorella powder CS'. According to the components and amounts of the following Table 11, soy protein concentrate (Arcon™ SM, ADM (Archer Daniels Midland), protein content of 75%) and the chlorella powder CS were mixed to prepare a dispersion containing soy protein concentrate at a concentration of 5% (w/w). The content of each component in Table 11 means % by weight. After the resulting dispersions were heated at 90 °C for 15 minutes, the amounts of 2-heptanone, 3,5-(E,E)-octadien-2-one, and benzaldehyde, which are beany flavor indicators, were analyzed via GC-MS/MS according to the same methods as in (3) of Example 1. The results are shown in Table 12.

Table 11

|  | Dispersion 4-1 | Dispersion 4-2 | Dispersion 4-3 | Dispersion 4-4 |
|---|---|---|---|---|
| Soy protein concentrate | 5.0 | 5.0 | 5.0 | 5.0 |
| Chlorella powder CS | - | 1.25 | 2.5 | 5.0 |
| Purified water | 95.0 | 93.75 | 92.5 | 90.0 |

Table 12

|  | 2-Heptanone | | 3,5-(E,E)-Octadien-2-one | | Benzaldehyde | |
|---|---|---|---|---|---|---|
|  | Relative peak ratio | Relative percentage | Relative peak ratio | Relative percentage | Relative peak ratio | Relative percentage |
| Dispersion 4-1 | 0.088±0.001 | 100 | 0.160±0.004 | 100 | 0.125±0.002 | 100 |

(continued)

| | 2-Heptanone | | 3,5-(E,E)-Octadien-2-one | | Benzaldehyde | |
|---|---|---|---|---|---|---|
| | Relative peak ratio | Relative percentage | Relative peak ratio | Relative percentage | Relative peak ratio | Relative percentage |
| Dispersion 4-2 | 0.009±0.000 | 10 | 0.011±0.000 | 7 | 0.042±0.001 | 33 |
| Dispersion 4-3 | 0.006±0.000 | 7 | 0.006±0.000 | 4 | 0.039±0.001 | 31 |
| Dispersion 4-4 | 0.006±0.000 | 7 | 0.004±0.000 | 2 | 0.037±0.001 | 30 |

From the results in Table 12 above, it can be confirmed that the relative values of 2-heptanone, 3,5-(E,E)-octadien-2-one, and benzaldehyde, which are representative beany flavor indicators, are significantly reduced when chlorella is mixed in.

## Claims

1. A method for reducing the beany flavor of a textured vegetable protein containing soy protein, the method of which comprises extruding a mixture comprising chlorella and soy protein to form a textured vegetable protein.

2. A method for preparing a textured vegetable protein with reduced beany flavor, the method of which comprises extruding a mixture comprising chlorella and soy protein to form a textured vegetable protein.

3. The method according to claim 1 or 2, wherein the amount of the soy protein is 10 to 36 wt%, based on the total weight of the mixture.

4. The method according to claim 1 or 2, wherein the chlorella is a powder obtained by drying a biomass obtained through culturing a chlorella strain.

5. The method according to claim 4, wherein the chlorella strain is *Chlorella protothecoides, Chlorella vulgaris, Chlorella sorokiniana,* or *Chlorella pyrenoidosa.*

6. The method according to claim 1 or 2, wherein the chlorella is a powder obtained by drying a biomass obtained through culturing a chlorophyll-deficient chlorella strain.

7. The method according to claim 6, wherein the chlorophyll-deficient chlorella strain is a *Chlorella protothecoides* species.

8. The method according to claim 6, wherein the chlorophyll-deficient chlorella strain is a *Chlorella protothecoides* species obtained through heterotrophic culture, with a sugar, in the absence of light.

9. The method according to claim 1 or 2, wherein the chlorella is a powder obtained by drying a biomass obtained through culturing a *Chlorella protothecoides* strain, having a whiteness index (WI) of 70 or more as calculated from the following formula and a crude protein content of 55 wt% or more in the biomass.

$$\mathrm{WI} = 100 - \sqrt{(100 - L)^2 + a^2 + b^2}$$

wherein, L, a, and b are Hunter L, a, and b values.

10. The method according to claim 9, wherein a crude protein content in the biomass is 55 to 80 wt%.

11. The method according to claim 9, wherein a chlorophyll content in the biomass is 3.0 or less mg/g dry cell wight.

12. The method according to claim 9, wherein a chlorophyll content in the biomass is 0.1 to 3.0 mg/g dry cell wight.

13. The method according to claim 9, wherein the strain is *Chlorella protothecoides* DS-NCRC7W (KCTC 15163BP).

14. The method according to claim 1 or 2, wherein the chlorella comprises a microalgae protein of 45 wt% or more based on dry weight.

15. The method according to claim 1 or 2, wherein the chlorella has a lipid content of 30 wt% or less based on dry weight.

16. The method according to claim 1 or 2, wherein the amount of the chlorella is 0.1 to 31 wt%, based on the total weight of the mixture.

17. The method according to claim 1 or 2, wherein the mixture further comprises 35 to 65 wt% of water.

18. The method according to claim 1 or 2, wherein the mixture comprises 10 to 36 wt% of soy protein, 0.1 to 31 wt% of chlorella, and 35 to 65 wt% of water.

19. The method according to claim 1 or 2, wherein the mixture further comprises gluten, oil, or a mixture thereof.

20. The method according to claim 1 or 2, wherein the mixture further comprises 0 to 10 wt% of gluten and 1 to 1.5 wt% of oil.

21. The method according to claim 1 or 2, wherein the mixture comprises 10 to 36 wt% of soy protein, 0.1 to 31 wt% of chlorella, 0 to 10 wt% of gluten, 1 to 1.5 wt% of oil, and 35 to 65 wt% of water.

22. The method according to claim 1 or 2, wherein the extruding is carried out at an ejection temperature of 80 to 170 °C and a cooling temperature of 68 to 75 °C, in a twin-screw extruder.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| International application No. |
| --- |
| **PCT/KR2023/016090** |

| A. | CLASSIFICATION OF SUBJECT MATTER |
| --- | --- |

**A23J 3/20**(2006.01)i; **A23J 3/16**(2006.01)i; **A23J 3/22**(2006.01)i; **A23P 30/20**(2016.01)i

According to International Patent Classification (IPC) or to both national classification and IPC

| B. | FIELDS SEARCHED |
| --- | --- |

Minimum documentation searched (classification system followed by classification symbols)

A23J 3/20(2006.01); A01G 31/00(2006.01); A23L 11/00(2016.01); A23L 2/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 클로렐라(Chlorella), 대두단백(soy protein), 압출(extruded), 식물성조직단백 (textured vegetable protein), 콩취(soy odor), 글루텐(gluten), 오일(oil)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| Y | CAPORGNO, Martin P. et al. Extruded meat analogues based on yellow, heterotrophically cultivated Auxenochlorella protothecoides microalgae. Innovative Food Science and Emerging Technologies. 16 December 2019. [Online]. vol. 59, 102275, pp. 1-10. <br> See abstract; page 2, right column-page 3, left column; and figure 1. | 1-22 |
| Y | KR 10-2005-0023818 A (KIM, Yong Ho et al.) 10 March 2005 (2005-03-10) <br> See paragraphs [0047]-[0049]. | 1-22 |
| Y | KR 10-2020-0141958 A (THE CORK INC.) 21 December 2020 (2020-12-21) <br> See example 1-1; claims 7 and 8; and table 1. | 19-21 |
| A | 대상, '황금클로렐라'로 '콩 단백질 시장'에 도전장. 식품저널 FOODNEWS. 09 April 2020, non-official translation (Daesang Corporation Challenges 'Soy Protein Market' with 'Golden Chlorella'). [Retrieved on 03 January 2024]. Retrieved from <URL: http://www.foodnews.co.kr/news/articleView.html?idxno=73469>. <br> See entire document. | 1-22 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 January 2024** | **26 January 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/016090** |

### C. DOCUMENTS CONSIDERED TO BE RELEVANT

| Category* | Citation of document, with indication, where appropriate, of the relevant passages | Relevant to claim No. |
| --- | --- | --- |
| A | US 2010-0303990 A1 (BROOKS, Geoffrey et al.) 02 December 2010 (2010-12-02)<br>  See entire document. | 1-22 |

Form PCT/ISA/210 (second sheet) (July 2022)

## INTERNATIONAL SEARCH REPORT
### Information on patent family members

International application No.

**PCT/KR2023/016090**

| Patent document cited in search report | | | Publication date (day/month/year) | Patent family member(s) | | | Publication date (day/month/year) |
|---|---|---|---|---|---|---|---|
| KR | 10-2005-0023818 | A | 10 March 2005 | KR | 10-0547912 | B1 | 01 February 2006 |
| KR | 10-2020-0141958 | A | 21 December 2020 | KR | 10-2460066 | B1 | 31 October 2022 |
| US | 2010-0303990 | A1 | 02 December 2010 | CN | 102057048 | A | 11 May 2011 |
| | | | | CN | 102057048 | B | 21 January 2015 |
| | | | | CN | 102271525 | A | 07 December 2011 |
| | | | | CN | 102271525 | B | 07 January 2015 |
| | | | | CN | 102300996 | A | 28 December 2011 |
| | | | | CN | 102300996 | B | 01 June 2018 |
| | | | | CN | 102575271 | A | 11 July 2012 |
| | | | | CN | 102712858 | A | 03 October 2012 |
| | | | | CN | 102712858 | B | 12 August 2015 |
| | | | | CN | 102946738 | A | 27 February 2013 |
| | | | | CN | 102946738 | B | 01 April 2015 |
| | | | | CN | 104561150 | A | 29 April 2015 |
| | | | | CN | 104770424 | A | 15 July 2015 |
| | | | | CN | 104783175 | A | 22 July 2015 |
| | | | | CN | 104783175 | B | 22 August 2017 |
| | | | | CN | 106367198 | A | 01 February 2017 |
| | | | | CN | 107034142 | A | 11 August 2017 |
| | | | | EP | 2265724 | A2 | 29 December 2010 |
| | | | | EP | 2265724 | A4 | 23 January 2013 |
| | | | | EP | 2339925 | A2 | 06 July 2011 |
| | | | | EP | 2339925 | A4 | 29 April 2015 |
| | | | | EP | 2339925 | B1 | 21 September 2022 |
| | | | | EP | 2370554 | A2 | 05 October 2011 |
| | | | | EP | 2370554 | A4 | 18 June 2014 |
| | | | | EP | 2370554 | B1 | 15 May 2019 |
| | | | | EP | 2370555 | A2 | 05 October 2011 |
| | | | | EP | 2370555 | A4 | 15 October 2014 |
| | | | | EP | 2370555 | B1 | 20 April 2016 |
| | | | | EP | 2411002 | A1 | 01 February 2012 |
| | | | | EP | 2411002 | A4 | 20 August 2014 |
| | | | | EP | 2411002 | B1 | 02 January 2019 |
| | | | | EP | 2418959 | A1 | 22 February 2012 |
| | | | | EP | 2418959 | A4 | 27 May 2015 |
| | | | | EP | 2418959 | B1 | 24 July 2019 |
| | | | | EP | 2419520 | A2 | 22 February 2012 |
| | | | | EP | 2419520 | A4 | 10 August 2016 |
| | | | | EP | 2419520 | B1 | 26 June 2019 |
| | | | | EP | 3098321 | A2 | 30 November 2016 |
| | | | | EP | 3098321 | A3 | 11 January 2017 |
| | | | | EP | 3098321 | B1 | 19 December 2018 |
| | | | | EP | 3517622 | A1 | 31 July 2019 |
| | | | | EP | 3622828 | A1 | 18 March 2020 |
| | | | | EP | 3622828 | B1 | 16 November 2022 |
| | | | | JP | 2011-519549 | A | 14 July 2011 |
| | | | | JP | 2012-505656 | A | 08 March 2012 |
| | | | | JP | 2012-510275 | A | 10 May 2012 |
| | | | | JP | 2012-513743 | A | 21 June 2012 |
| | | | | JP | 2012-523843 | A | 11 October 2012 |

Form PCT/ISA/210 (patent family annex) (July 2022)

### INTERNATIONAL SEARCH REPORT
Information on patent family members

| International application No. |
| --- |
| **PCT/KR2023/016090** |

| Patent document cited in search report | Publication date (day/month/year) | Patent family member(s) | | | Publication date (day/month/year) |
| --- | --- | --- | --- | --- | --- |
| | | JP | 2014-061009 | A | 10 April 2014 |
| | | JP | 2014-128291 | A | 10 July 2014 |
| | | JP | 2014-138620 | A | 31 July 2014 |
| | | JP | 2015-033388 | A | 19 February 2015 |
| | | JP | 2015-216928 | A | 07 December 2015 |
| | | JP | 2016-116535 | A | 30 June 2016 |
| | | JP | 2016-182144 | A | 20 October 2016 |
| | | JP | 2016-198117 | A | 01 December 2016 |
| | | JP | 2017-140019 | A | 17 August 2017 |
| | | JP | 2018-075040 | A | 17 May 2018 |
| | | JP | 2018-126167 | A | 16 August 2018 |
| | | JP | 2020-072663 | A | 14 May 2020 |
| | | JP | 5636039 | B2 | 03 December 2014 |
| | | JP | 5731982 | B2 | 10 June 2015 |
| | | JP | 5859311 | B2 | 10 February 2016 |
| | | JP | 6066463 | B2 | 25 January 2017 |
| | | JP | 6109475 | B2 | 05 April 2017 |
| | | JP | 6386727 | B2 | 05 September 2018 |
| | | KR | 10-1607235 | B1 | 29 March 2016 |
| | | KR | 10-1763878 | B1 | 01 August 2017 |
| | | KR | 10-1769121 | B1 | 17 August 2017 |
| | | KR | 10-1780799 | B1 | 22 September 2017 |
| | | KR | 10-1888973 | B1 | 16 August 2018 |
| | | KR | 10-1899933 | B1 | 19 September 2018 |
| | | KR | 10-2001129 | B1 | 17 July 2019 |
| | | KR | 10-2010-0131009 | A | 14 December 2010 |
| | | KR | 10-2011-0091567 | A | 11 August 2011 |
| | | KR | 10-2011-0096555 | A | 30 August 2011 |
| | | KR | 10-2011-0138407 | A | 27 December 2011 |
| | | KR | 10-2017-0091170 | A | 08 August 2017 |
| | | KR | 10-2017-0096218 | A | 23 August 2017 |
| | | KR | 10-2017-0107595 | A | 25 September 2017 |
| | | US | 10260076 | B2 | 16 April 2019 |
| | | US | 10278912 | B2 | 07 May 2019 |
| | | US | 11542456 | B2 | 03 January 2023 |
| | | US | 2009-0305942 | A1 | 10 December 2009 |
| | | US | 2010-0151112 | A1 | 17 June 2010 |
| | | US | 2010-0151535 | A1 | 17 June 2010 |
| | | US | 2010-0151538 | A1 | 17 June 2010 |
| | | US | 2010-0151539 | A1 | 17 June 2010 |
| | | US | 2010-0151567 | A1 | 17 June 2010 |
| | | US | 2010-0170144 | A1 | 08 July 2010 |
| | | US | 2010-0239712 | A1 | 23 September 2010 |
| | | US | 2010-0297292 | A1 | 25 November 2010 |
| | | US | 2010-0297295 | A1 | 25 November 2010 |
| | | US | 2010-0297296 | A1 | 25 November 2010 |
| | | US | 2010-0297323 | A1 | 25 November 2010 |
| | | US | 2010-0297325 | A1 | 25 November 2010 |
| | | US | 2010-0297331 | A1 | 25 November 2010 |
| | | US | 2010-0303957 | A1 | 02 December 2010 |

Form PCT/ISA/210 (patent family annex) (July 2022)

## INTERNATIONAL SEARCH REPORT
### Information on patent family members

| International application No. |
| --- |
| **PCT/KR2023/016090** |

| Patent document cited in search report | Publication date (day/month/year) | Patent family member(s) | | | Publication date (day/month/year) |
| --- | --- | --- | --- | --- | --- |
| | | US | 2010-0303961 | A1 | 02 December 2010 |
| | | US | 2010-0303989 | A1 | 02 December 2010 |
| | | US | 2011-0165634 | A1 | 07 July 2011 |
| | | US | 2011-0203168 | A1 | 25 August 2011 |
| | | US | 2011-0250658 | A1 | 13 October 2011 |
| | | US | 2012-0128851 | A1 | 24 May 2012 |
| | | US | 2012-0130099 | A1 | 24 May 2012 |
| | | US | 2012-0149075 | A1 | 14 June 2012 |
| | | US | 2012-0202768 | A1 | 09 August 2012 |
| | | US | 2012-0277453 | A1 | 01 November 2012 |
| | | US | 2012-0283460 | A1 | 08 November 2012 |
| | | US | 2013-0005005 | A1 | 03 January 2013 |
| | | US | 2013-0006006 | A1 | 03 January 2013 |
| | | US | 2013-0078709 | A1 | 28 March 2013 |
| | | US | 2013-0089916 | A1 | 11 April 2013 |
| | | US | 2013-0122180 | A1 | 16 May 2013 |
| | | US | 2013-0165677 | A1 | 27 June 2013 |
| | | US | 2013-0273621 | A1 | 17 October 2013 |
| | | US | 2013-0295268 | A1 | 07 November 2013 |
| | | US | 2013-0296591 | A1 | 07 November 2013 |
| | | US | 2014-0249342 | A1 | 04 September 2014 |
| | | US | 2014-0256024 | A1 | 11 September 2014 |
| | | US | 2014-0305031 | A1 | 16 October 2014 |
| | | US | 2014-0336100 | A1 | 13 November 2014 |
| | | US | 2015-0150776 | A1 | 04 June 2015 |
| | | US | 2015-0218604 | A1 | 06 August 2015 |
| | | US | 2016-0324167 | A1 | 10 November 2016 |
| | | US | 2017-0314048 | A1 | 02 November 2017 |
| | | US | 2018-0139994 | A1 | 24 May 2018 |
| | | US | 2018-0216027 | A1 | 02 August 2018 |
| | | US | 2019-0254291 | A1 | 22 August 2019 |
| | | US | 2019-0254292 | A1 | 22 August 2019 |
| | | US | 2021-0244064 | A1 | 12 August 2021 |
| | | US | 7883882 | B2 | 08 February 2011 |
| | | US | 7935515 | B2 | 03 May 2011 |
| | | US | 8119583 | B2 | 21 February 2012 |
| | | US | 8187860 | B2 | 29 May 2012 |
| | | US | 8222010 | B2 | 17 July 2012 |
| | | US | 8268610 | B2 | 18 September 2012 |
| | | US | 8278261 | B2 | 02 October 2012 |
| | | US | 8435767 | B2 | 07 May 2013 |
| | | US | 8450083 | B2 | 28 May 2013 |
| | | US | 8674180 | B2 | 18 March 2014 |
| | | US | 8697427 | B2 | 15 April 2014 |
| | | US | 8772575 | B2 | 08 July 2014 |
| | | US | 8822176 | B2 | 02 September 2014 |
| | | US | 8822177 | B2 | 02 September 2014 |
| | | US | 8927522 | B2 | 06 January 2015 |
| | | US | 8951777 | B2 | 10 February 2015 |
| | | US | 9062294 | B2 | 23 June 2015 |

Form PCT/ISA/210 (patent family annex) (July 2022)

**INTERNATIONAL SEARCH REPORT**
Information on patent family members

International application No.

**PCT/KR2023/016090**

| Patent document cited in search report | Publication date (day/month/year) | Patent family member(s) | | | Publication date (day/month/year) |
|---|---|---|---|---|---|
| | | US | 9353389 | B2 | 31 May 2016 |
| | | US | 9464304 | B2 | 11 October 2016 |
| | | US | 9593351 | B2 | 14 March 2017 |
| | | US | 9896642 | B2 | 20 February 2018 |
| | | WO | 2009-126843 | A2 | 15 October 2009 |
| | | WO | 2009-126843 | A3 | 30 December 2009 |
| | | WO | 2010-045368 | A2 | 22 April 2010 |
| | | WO | 2010-045368 | A3 | 24 June 2010 |
| | | WO | 2010-063031 | A2 | 03 June 2010 |
| | | WO | 2010-063031 | A3 | 22 November 2012 |
| | | WO | 2010-063032 | A2 | 03 June 2010 |
| | | WO | 2010-063032 | A3 | 14 October 2010 |
| | | WO | 2010-111710 | A1 | 30 September 2010 |
| | | WO | 2010-120923 | A1 | 21 October 2010 |
| | | WO | 2010-120939 | A2 | 21 October 2010 |
| | | WO | 2010-120939 | A3 | 09 December 2010 |

Form PCT/ISA/210 (patent family annex) (July 2022)

## REFERENCES CITED IN THE DESCRIPTION

**Patent documents cited in the description**

- KR 101106198
- KR 102026681
- KR 1020230022628